(19) **Europäisches Patentamt**

**European Patent Office**

**Office européen des brevets**

(11) **EP 1 251 464 A2**

(12) **EUROPÄISCHE PATENTANMELDUNG**

(43) Veröffentlichungstag:
23.10.2002 Patentblatt 2002/43

(51) Int Cl.⁷: **G06T 5/20**

(21) Anmeldenummer: 02003023.5

(22) Anmeldetag: **12.02.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **21.03.2001 DE 10113872**
**31.01.2002 DE 10203905**

(71) Anmelder: **Heidelberger Druckmaschinen Aktiengesellschaft**
**69115 Heidelberg (DE)**

(72) Erfinder:
• **Hansen, Michael, Dr.**
**24116 Kiel (DE)**
• **Selder, Erich, Dr.**
**60318 Frankfurt am Main (DE)**
• **Von Wechgeln, Jörg Olaf**
**24582 Wattenbek (DE)**

(54) **Verfahren zur Retouche von in Pixeln redigitalisierten, gerasterten binären Bilddaten**

(57) Die Erfindung betrifft ein Verfahren zur Retouche von in Pixeln redigitalisierten, gerasterten binären Bilddaten, vorzugsweise umfassend die Beseitigung lokaler Rasterdefekte, insbesondere von Staub- und Kratzerartefakten.

Der Erfindung liegt die Aufgabe zugrunde, ein Retoucheverfahren der genannten Gattung zu verbessern.

Diese Aufgabe wird erfindungsgemäß durch ein Retoucheverfahren gelöst, das sich dadurch auszeichnet, daß zur Detektion von Rasterdefekten defekte Rasterpunkte selektiert und registriert werden.

Das vorliegende Verfahren beseitigt insbesondere Staub- und Kratzerartefakte aus verunreinigten Bilddaten. Ferner werden Fehlstellen auch im Raster aufgefüllt und inhomgene Bildregionen zum Teil korrigiert. Dabei wird die Entstehung von sichtbarem Moire in den retuschierten Bilddaten mit besonderem Vorteil durch nur kleinflächige Ersetzungen vermieden.

**EP 1 251 464 A2**

**Beschreibung**

Die Erfindung betrifft ein Verfahren zur Retouche von in Pixeln redigitalisierten, gerasterten binären Bilddaten, vorzugsweise umfassend die Beseitigung lokaler Rasterdefekte, insbesondere von Staub- und Kratzerartefakten.

Bei der Redigitalisierung gerasterter Vorlagen mittels Scannen vermindern vielfältige Verunreinigungen (Staub, Kratzer, ...) die Ausgabequalität der binären Bilddaten. Diese Störungen können durch Abnutzung, ungeeignete Lagerung oder unsachgemäßer Handhabung entstanden sein. Auch Defekte beim Scanner, z. B. ein Kratzer im Glas oder Staub im optischen System, führen zu einer unerwünschten Verschlechterung der Ausgabequalität.

Verschiedene Verfahren, wie z. B. das sogn. Pixelcloning bzw. andere Retuschen sind auf den binären Bilddaten, wenn sie nicht auf dem Raster der Vorlage aufsetzen, äußerst aufwendig und zeitraubend zu bedienen. Bei anderen Verfahren wird eine großflächigere Ersetzung der Rasterpunkte im gewählten Ausschnitt durchgeführt, die dann jedoch zu Moire führen kann und dadurch die Ausgabequalität verschlechtern.

Der Erfindung liegt die Aufgabe zugrunde, ein Retoucheverfahren der eingangs genannten Gattung unter Vermeidung der vorgenannten Probleme zu verbessern.

Diese Aufgabe wird erfindungsgemäß durch ein Retoucheverfahren gelöst, das sich dadurch auszeichnet, dass zur Detektion von Rasterdefekten defekte Rasterpunkte selektiert und registriert werden.

Das vorliegende Verfahren beseitigt insbesondere Staub- und Kratzerartefakte aus verunreinigten Bilddaten. Ferner werden Fehlstellen auch im Raster aufgefüllt und inhomgene Bildregionen z. T. korrigiert. Dabei wird die Entstehung von sichtbarem Moire in den retuschierten Bilddaten mit besonderem Vorteil durch nur kleinflächige Ersetzungen vermieden.

Das erfindungsgemäße Verfahren gliedert sich im wesentlichen und bevorzugt in zwei aufeinanderfolgende Verarbeitungsschritte:

- A) der Detektion von verunreinigten bzw. defekten Bildregionen in der Rasterfläche gemäß einem oder mehreren der Ansprüche 1 bis 6 und vorzugsweise

- B) der Ersetzung der defekten Regionen mit geeigneten Rasterbilddaten gemäß einem oder mehreren der Ansprüche 7 bis 10.

Darauf wird im weiteren näher eingegangen.

A) Detektion von defekten Bildregionen

Eine Rasterfläche besteht aus elliptischen oder kreisförmigen Rasterpunkten, die im allgemeinen in einem rechtwinkligen Raster angeordnet sind. Das Raster ist durch einen Ursprung (o, o) und einem Rastervektor (u, v) eindeutig beschrieben. Der Radius eines Rasterpunktes ist abhängig von der zugehörigen Flächenfüllung (0— 100%) der Rasterfläche. Per Definition besteht ein Rasterpunkt aus schwarzen (gesetzten oder angesprochenen) Pixeln der Binärvorlage. Unter einer defekten Bildregion ist eine Anzahl von Rasterpunkten zu verstehen, die z. B. durch Verunreinigungen eine von ihrer Umgebung abweichende Flächenfüllung auf-weisen oder die auf einer irregulären Rasterposition liegen.

Die Detektion eines solchen defekten Bereiches erfolgt in den folgenden drei Schritten:

1. Auffinden von allen möglichen Rasterpunkten im gewählten Bildbereich.
2. Lokale Analyse der Rasterstruktur.
3. Selektion und Registrierung defekter Rasterpunkte in einer Liste.

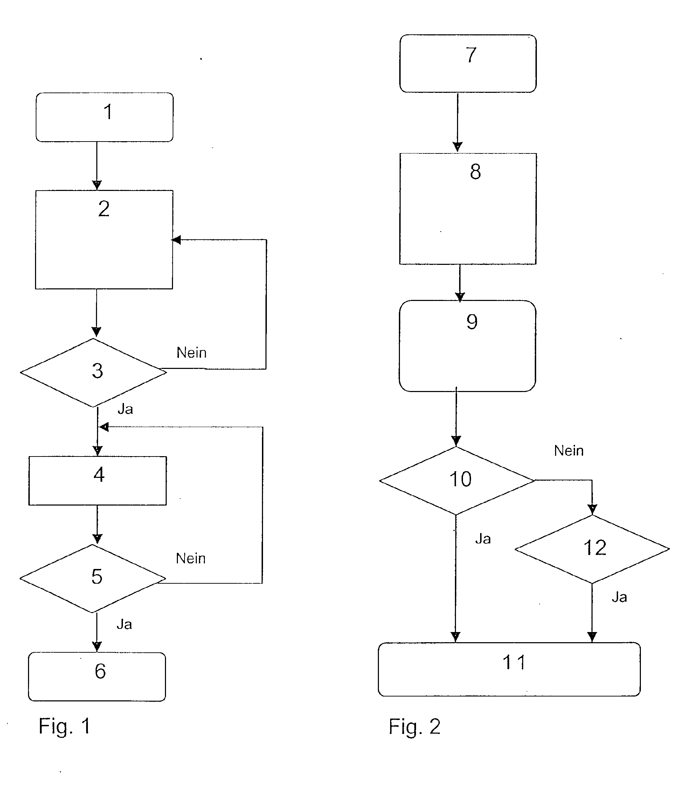

Zu 1. Die möglichen Rasterpunkte werden durch eine Zusammenhangsanalyse aufgefunden. Diese ordnet benachbarte schwarze Pixel einem Rasterpunkt zu. Da das gegebene Bild bzw. Teilbild unterschiedliche Flächenfüllungen aufweisen kann und die Rasterpunkte ab dem sogenannten Punktschlussbereich (ca. 50%) z. T. zusammenhängend sind, muss das gegebene Bild geeignet vorverarbeitet werden. Durch eine morphologische Erosion wird eine einheitliche Flächenfüllung von ca. 35 % erreicht, die für die Zusammenhangsanalyse notwendig ist. Das Ergebnis der Zusammenhangsanalyse ist eine Liste von Rasterpunkten, aus der zu große oder zu kleine Punkte gelöscht werden. Diese werden nicht für die anschließende Rasterrekonstruktion verwendet.
(siehe Fig. 1)

Zu 2. Zur lokalen Rekonstruktion der vorliegenden Rasterstruktur wird jedem möglichen Rasterpunkt der Liste eine Pixelkoordinate (x, y) zugeordnet, die sein Zentrum beschreibt.

In einem rechtwinkligen Raster lässt sich jede reguläre Position durch:

$$(x, y) = (o, o) + i\,(u, v) + j\,(-v, u)$$

beschreiben, wobei mit (i, j) die sogenannte Rasterposition der Rasterpunkte zu verstehen sind. Aus einer Mindestanzahl von 4 Rasterpunkten können mittels einfacher Optimierungsverfahren die bisher unbekannten Rasterparameter (o, o) und (u, v) bestimmt werden. Mit Hilfe dieser Rasterparameter werden im folgenden Schritt aus der Vielzahl der möglichen Rasterpunkte, die defekten Punkte selektiert.

Zu 3. Ziel der Erfindung ist insbesondere die Beseitigung von Staub- und Kratzerartefakten aus gerasterten Vorlagen. Das korrigierte Bild soll eine der Vorlage entsprechende vollständige Rasterpunktstruktur aufweisen, in der jeder Rasterpunkt durch seine Rasterposition beschrieben ist. Die (in 1.) gefundene Liste der Rasterpunkte wird in die Rasterpunktstruktur übertragen. Freie Rasterpositionen, d. h. Bildbereiche in denen keine Rasterpunkte gefunden wurden, werden als Defekte in die Liste eingetragen.

In einem weiteren Schritt werden alle Rasterpunkte an besetzten Rasterpositionen als defekt eingetragen, wenn ihre Flächenfüllung stärker als ein gewählter Prozentwert von der mittleren Flächenfüllung des gesamten Bildes oder seiner lokalen Umgebung abweicht. Dadurch werden global oder lokal zu helle oder zu dunkle Rasterpunkte aussortiert.

Die in der Liste eingetragen Rasterpositionen (i, j) mit den zugehörigen Bildpixeln stellen die Gesamtheit der defekten Bildregionen dar. Jede Rasterposition (i, j) repräsentiert also einen Rasterpunkt (siehe Fig.2).

B) Ersetzung der defekten Bildregionen

Die Ersetzung der defekten Bildregionen erfolgt bevorzugt durch eine lokale subpixelgenaue Interpolation der defekten Rasterpunkte durch geeignete Nachbarpunkte. Liegt z. B. nur ein defekter Rasterpunkt vor, wird er aus den in der Rasterstruktur benachbarten Rasterpunkten berechnet, wenn von denen eine Mindestanzahl nicht defekt ist. Liegen zu viele defekte Rasterpunkte benachbart vor, so wird die Ersetzung iterativ durchgeführt, d. h. zuerst werden die Punkte ersetzt, die eine ausreichende Zahl nicht defekter Nachbarn haben. Sie werden dann in der folgenden Iteration als nicht defekt markiert und zur weiteren Ersetzung der noch defekten Rasterpunkte benutzt. Erst wenn alle defekten Punkte ersetzt wurden, endet das Verfahren.

Die subpixelgenaue Interpolation basiert auf einer Verschiebung der Zentren der Rasterpunkte mittels geeigneter Maßstabfilter auf ganzzahlige Pixelkoordinaten (x, y) und einer anschließenden einfachen Mittelwertbildung über die gesetzten Pixel eines Rasterpunktes.

Der bevorzugte Ablauf des erfindungsgemäßen Verfahrens wird anhand zweier Flussdiagramme nachfolgend nochmals skizziert, wobei das erfindungsgemäße Verfahren nicht auf diese bevorzugten Abläufe beschränkt sein soll, sondern diese Abläufe nur beispielhaft und prinzipiell geschildert werden. Es zeigen:

Fig.1    ein Flussdiagramm für den Ablauf des erfindungsgemäßen Verfahrens zur Selektion von defekten Rasterpunkten bis zu deren Registrierung in einer Liste gemäß des vorbeschriebenen Abschnittes A) des Verfahrens und

Fig. 2    ein Flussdiagramm für den Ablauf des erfindungsgemäßen Verfahrens zur Ersetzung der defekten Regionen gemäß des vorbeschriebenen Abschnittes B) des Verfahrens.

Fig. 1 zeigt ein Flussdiagramm für den Ablauf des erfindungsgemäßen Verfahrens zur Selektion von defekten Rasterpunkten bis zu deren Registrierung in einer Liste gemäß des vorbeschriebenen Abschnittes A) des Verfahrens.

Eine zu korrigierende Binärvorlage 1 wird zu Beginn des Verfahrens genommen und es erfolgt eine binäre Erosion der ermittelten Rasterpunkte bei 2, wobei die Ermittlung und die Durchführung der Erosion bereits weiter vorn beschrieben worden ist. Diese Erosion wird mit einer Ja/Nein - Abfrage 3 über eine Schleife durchgeführt, bis die Rasterpunkte eine einheitliche Flächenfüllung ihrer Rasterzellen von < 35% aufweisen.

Über eine Zusammenhangsanalyse bei 4 werden nach der Erosion zusammenhängende Pixel ermittelt und jeweils einem Rasterpunkt zugeordnet, wodurch die Rasterpunkte über die Ja/Nein - Abfrage 5 identifiziert werden.

Die identifizierten Rasterpunkte werden in eine Liste bei 6 eingetragen und auf diese Weise registriert.

Fig. 2 zeigt ein Flussdiagramm für den Ablauf des erfindungsgemäßen Verfahrens zur Ersetzung der defekten Regionen gemäß des weiter oben beschriebenen Abschnittes B) des Verfahrens.

Die aus 6 in Fig. 1 erhaltene Liste der ermittelten Rasterpunkte wird eingangs bei 7 genommen, und es werden aus ihr bei 8 die Rasterparameter berechnet. Daraus wird bei 9 die Rasterstruktur ermittelt, und somit auch die möglichen Rasterpunkte.

Bei 10 wird durch eine Ja/Nein - Abfrage abgefragt, ob die Position eines möglichen Rasterpunktes frei ist oder nicht. Es wird also Rasterpunktweise die Liste aus 6 bzw. 7 der ermittelten Rasterpunkte mit der quasi aus 9 erhaltbaren Liste der möglichen Rasterpunkte verglichen. Daraus ermittelte freie Rasterpositionen werden unmittelbar bei 11 in eine Liste defekter Rasterpunkte eingetragen, während bei als vorhandenen ermittelten Rasterpunkten diese nur dann in die Liste defekter Rasterpunkte bei 11 eingetragen werden, wenn eine weitere Abfrage bei 12 ergibt, dass bei dem jeweils ermittelten Rasterpunkt die Flächenfüllung nicht korrekt ist, der Rasterpunkt also nicht korrekt ausgeprägt ist.

An dieser Stelle sollte vielleicht noch einmal betont werden, dass das erfindungsgemäße Verfahren insbesondere dazu vorgesehen ist, lokal Rasterdefekte zu beseitigen, so dass größere Flächen gegebenenfalls willentlich unbedruckter Bereiche der Vorlage nicht in Betracht zu ziehen sind.

**Patentansprüche**

**1.**    Verfahren zur Retouche von in Pixeln redigitalisierten, gerasterten binären Bilddaten, vorzugsweise umfassend die Beseitigung lokaler Rasterdefekte, insbesondere von Staub- und Kratzerartefakten, **dadurch gekennzeichnet,**

**dass** zur Detektion von Rasterdefekten defekte Rasterpunkte selektiert und registriert werden.

2. Verfahren nach Anspruch 1, **dadurch gekennzeichnet, dass** für die Selektion defekter Rasterpunkte in einem ausgewählten Rasterbereich (Bildbereich) alle möglichen Rasterpunkte ermittelt und die vorhandene Rasterstruktur analysiert wird.

3. Verfahren nach Anspruch 2, **dadurch gekennzeichnet, dass** einander unmittelbar benachbart angeordnete, angesprochene ("geschwärzte") Pixel als einen Rasterpunkt bildend angesehen werden.

4. Verfahren nach Anspruch 3, **dadurch gekennzeichnet, dass** zur Vermeidung von Rasterpunktberührungen einander benachbarter Rasterpunkte mittels einer morphologischen Erosion für die Rasterpunkte eine einheitliche Größe mit einem hinreichend kleinen Flächenfüllungsgrad einer Rasterzelle erreicht wird.

5. Verfahren nach einem der Ansprüche 2 bis 4, **dadurch gekennzeichnet, dass** durch Vergleich der ermittelten Rasterpunkte und der möglichen Rasterpunkte fehlende Rasterpunkte als defekte Rasterpunkte selektiert und registriert werden.

6. Verfahren nach einem der vorhergehenden Ansprüche, **dadurch gekennzeichnet, dass** Rasterpunkte als defekt Rasterpunkte selektiert und registriert werde, die im Vergleich zum Mittel einer Anzahl von Rasterpunkten zu viel (dunkel) oder zu wenig (hell) ausgeprägt sind.

7. Verfahren zur Retouche von redigitalisierten, gerasteren Vorlagen, insbesondere nach einem der vorhergehenden Ansprüche, **dadurch gekennzeichnet, dass** defekte Rasterpunkte rasterpunktweise korrigiert werden.

8. Verfahren nach Anspruch 7, **dadurch gekennzeichnet, dass** die Korrektur eines defekten Rasterpunktes anhand der Interpolation benachbarter, korrekter Rasterpunkte erfolgt.

9. Verfahren nach Anspruch 8, **dadurch gekennzeichnet, dass** die Korrektur eines Bereiches mit mehreren defekten Rasterpunkten fortschreitend (iterativ) jeweils an dem Rasterpunkt vorgenommen wird, der die meisten korrekten oder bereits korrigierten Rasterpunkte für eine Interpolation in seiner Umgebung aufweist.

10. Verfahren nach einem der Ansprüche 8 oder 9, **dadurch gekennzeichnet, dass** eine subpixelgenaue Interpolation, basierend auf einer Verschiebung der Zentren der Rasterpunkte mittels geeigneter Maßstabsfilter auf ganzzahlige Pixelkoodinaten und einer anschließenden einfachen Mittelwertbildung über die gesetzten Pixel eines Rasterpunkte erfolgt.

Fig. 1

Fig. 2